# EUROPÄISCHE PATENTANMELDUNG

(11) **EP 0 571 761 A2**
(43) Veröffentlichungstag der Anmeldung: **01.12.1993**
(21) Anmeldenummer: 93106522.1
(22) Anmeldetag: 22.04.1993
(51) Int. Cl.: H04N 7/087

(54) **Videogerät zur Verarbeitung von Zusatzsignalen, welche in den Austastlücken von Fernsehsignalen übertragen werden**

(30) Priorität: 25.05.1992 DE 4217246
(71) Anmelder: GRUNDIG E.M.V. Elektro-Mechanische Versuchsanstalt Max Grundig holländ. Stiftung & Co. KG., D-90762 Fürth (DE)
(72) Erfinder: Pompe, Reiner, GRUNDIG E.M.V., W-8510 Fürth/Bay (DE); Mager, Gerhard, GRUNDIG E.M.V., W-8510 Fürth/Bay (DE)
(74) Vertreter: Eichstädt, Alfred

(57) **Zusammenfassung**

Die Erfindung betrifft ein Videogerät, welches eine Vorrichtung zur Erzeugung einer Tabelle aufweist, die auf einem Bildschirm dargestellt werden kann und eine Übersicht über Fernsehsendungen gibt, die in einem vorgegebenen Zeitintervall ausgestrahlt werden und/oder einer vorgegebenen Programmart angehören. Die in der Tabelle dargestellten Informationen werden aus Zusatzsignalen abgeleitet, die in den Austastlücken des Fernsehsignals übertragen werden.

## Beschreibung

Die Erfindung betrifft ein Videogerät mit den im Oberbegriff des Anspruchs 1 angegebenen Merkmalen.

Aus der EP-A2-0 337 336 ist es bereits bekannt, nach dem Einschalten eines Fernsehempfängers oder nach einer Umschaltung auf einen anderen Kanal den Titel der momentanen Sendung auf dem Bildschirm des Fernsehempfängers darzustellen, Dies geschieht unter Auswertung einer Videotextseite, die den gewünschten Titel enthält. Zum Auffinden dieser Videotextseite werden zunächst die im VPS-Code des empfangenen Senders enthaltenen Kennsignale für den empfangenen Sender extrahiert. Danach wird im Videotextdatenstrom nach denselben Kennsignalen gesucht. Nach dem Auffinden des richtigen Senders werden weiterhin die im VPS-Code enthaltenen Kennsignale für die momentane Sendung mit den im Videotextdatenstrom enthaltenen Daten solange verglichen, bis eine Übereinstimmung erkannt wird. Ist dies geschehen, so erfolgt eine Abspeicherung der der momentanen Sendung zugehörigen Informationen, zu denen auch der Titel der Sendung gehört, in einem geräteseitigen Speicher. Durch eine geeignete Steuerung des Auslesevorgangs aus diesem Speicher durch den Mikrocomputer des Gerätes kann dann eine Darstellung des Titels der momentanen Sendung auf dem Bildschirm erfolgen. Auf ähnliche Art und Weise kann auf dem Bildschirm auch eine Übersicht über die Titel aller momentan laufenden Sendungen dargestellt werden.

Da das Auffinden der gewünschten Titelinformationen im Videotextdatenstrom bei den heute üblichen Videotextzyklen vergleichsweise lange dauern kann, beispielsweise 20 Sekunden, wird im bekannten Fall weiterhin vorgeschlagen, im geräteseitigen Speicher bereits vorab für alle Stationen die Titel für jeweils alle Sendungen eines Tages abzuspeichern.

Der Erfindung liegt die Aufgabe zugrunde, einen Weg aufzuzeigen, wie die Darstellungsmöglichkeiten des aus der EP-A2-0 337 336 bekannten Videogerätes verbessert werden können.

Diese Aufgabe wird bei einem Videogerät mit den im Oberbegriff des Anspruchs 1 angegebenen Merkmalen durch die im kennzeichnenden Teil des Anspruchs 1 angebenen Merkmale und bei einem Videogerät mit den im Oberbegriff des Anspruchs 3 angebenen Merkmalen durch die im kennzeichnenden Teil des Anspruchs 3 angebenen Merkmale gelöst. Vorteilhafte Ausgestaltungen bzw. Weiterbildungen ergeben sich aus den abhängigen Patentansprüchen.

Die Vorteile der Erfindung bestehen insbesondere darin, daß der Benutzer sich nicht nur eine Übersicht über das aktuelle, derzeit ausgestrahlte Fernsehprogramm verschaffen kann, sondern auch über Fernsehprogramme, die in einem definierten, zukünftigen Zeitintervall gesendet werden oder die einer definierten Programmart angehören.

So kann sich der Benutzer beispielsweise an einem Dienstag um 18.00 Uhr eine Übersicht über das am Abend desselben Tages zwischen 20.00 Uhr und 21.30 Uhr vorgesehene Fernsehprogramm oder über das am darauffolgenden Tag zwischen 20.00 und 22.00 Uhr vorgesehene Fernsehprogramm verschaffen.

Mit den im Anspruch 2 angegebenen Merkmalen wird es Benutzern in vorteilhafter Weise ermöglicht, die Übersicht auf Fernsehprogramme, die in einem bestimmten Zeitintervall gesendet werden und einer bestimmten Programmart angehören, zu beschränken.

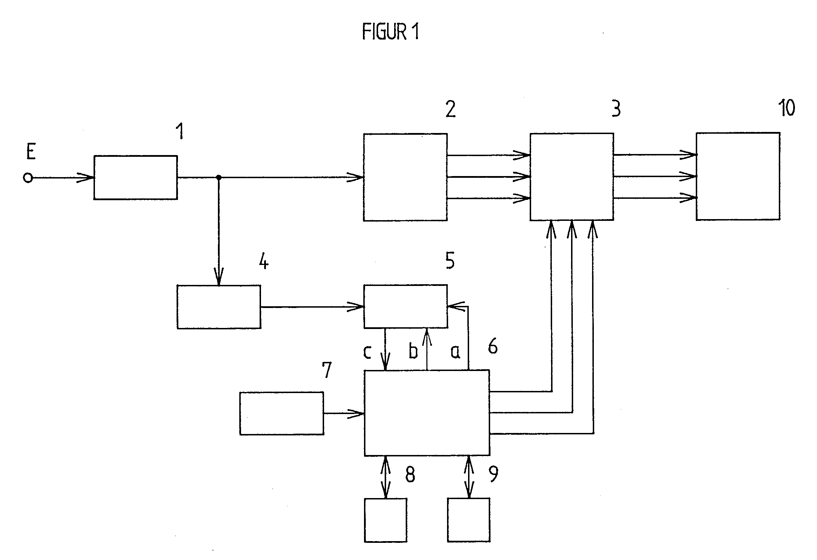

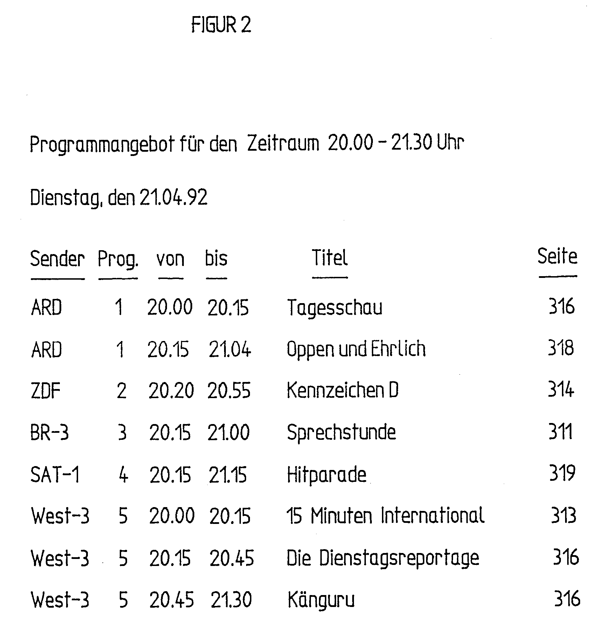

Weitere vorteilhafte Eigenschaften der Erfindung ergeben sich aus der Erläuterung von Ausführungsbeispielen anhand der Figuren 1 und 2.

Die
- Figur 1 zeigt die zum Verständnis der Erfindung notwendigen Bestandteile eines Fernsehempfängers und
- Figur 2 zeigt ein Beispiel für eine auf dem Bildschirm dargestellte Übersichtsseite.

Die Figur 1 zeigt die zum Verständnis der Erfindung notwendigen Bestandteile eines Fernsehempfängers. Dem Eingang E der Eingangsschaltung 1, die einen Tuner und einen Zwischenfrequenzbaustein aufweist, wird ein von einer Fernsehantenne oder einer Kabelübertragungsstrecke abgeleitetes Fernsehsignal zugeführt. Am Ausgang der Eingangsschaltung steht ein FBAS-Signal zur Verfügung. Dieses wird einem Farbdecoder 2 zugeführt, der an seinem Ausgang RGB-Signale zur Verfügung stellt. Diese werden über eine Eintastschaltung 3 an den Bildschirm 10 des Fernsehempfängers weitergeleitet.

Aus dem am Ausgang der Eingangsschaltung 1 zur Verfügung stehenden FBAS-Signal werden in einer Videotextabtrennschaltung 4 die in den Vertikalaustastlücken des Fernsehsignals enthaltenen Videotextsignale abgetrennt.

Diese Videotextsignale enthalten unter anderem Programmvorschauseiten, auf denen eine Übersicht über alle Fernsehsendungen der jeweiligen Sendeanstalt bzw. Programmquelle für die Dauer einer Woche enthalten ist. Diese Übersicht beinhaltet Informationen über die Programmquelle, den Titel, den Sendetag, die Anfangszeit, die Endzeit und die Programmart jeder Fernsehsendung, die in der genannten Woche ausgestrahlt wird.

Die Videotextsignale werden einer Überprüfungsschaltung 5 zugeführt, in welcher überprüft wird, ob der Sendetag und die durch die Anfangs- und Endzeit definierte Sendezeit jeder Sendung mit einem vorgebenen Sendetag Übereinstimmung aufweisen und in einem vorgegebenen Zeitintervall liegen.

Die Informationen, die dem vorgegebenen Sendetag und dem vorgegebenen Zeitintervall entsprechen, werden vom Benutzer über die Bedieneinheit 7 des Fernsehempfängers eingegeben und unter Steuerung durch einen Mikrocomputer 6 in einer ersten Speichereinheit 8 zwischengespeichert. Von dort aus werden sie über die Leitung a der Überprüfungsschaltung 5 zugeführt.

Die Überprüfungsschaltung 5 wird vom Mikrocomputer 6 über die Leitung b aktiviert und liefert über die Leitung c im Falle von Übereinstimmung die aus dem Videotextdatenstrom abgeleiteten Informationen über die Programmquelle, die Anfangszeit, die Endzeit und den Titel jeder Sendung, die am vorgegebenen Sendetag im vorgegebenen Zeitintervall gesendet wird. Diese Informationen werden in einer zweiten Speichereinheit 9 abgelegt.

Auf die gleiche Art und Weise werden alle weiteren Sender, auf die das Fernsehgerät abgestimmt ist, daraufhin überprüft, ob die zugehörigen Programmvorschauseiten Sendungen enthalten, deren Sendetag mit dem vorgegebenen Sendetag übereinstimmt und deren Anfangs- und Endzeit im vorgegebenen Zeitintervall liegt. Die zu diesen Sendungen gehörigen Informationen über die Programmquelle, den Titel, den Sendetag und die Anfangs- und die Endzeit werden ebenfalls über die Leitung c und den Mikrocomputer 6 in der zweiten Speichereinheit 9 abgelegt.

Von dort aus können die abgespeicherten Informationen unter Steuerung durch den Mikrocomputer 6 über die Eintastschaltung 3 dem Bildschrim 10 zugeführt und dort in Form einer Tabelle dargestellt werden.

Ein Beispiel für eine derartige Tabelle ist in Figur 2 gezeigt. In dieser Tabelle ist zusätzlich zu den obengenannten Informationen auch angegeben, welche Stationstaste der jeweiligen Sendung zugeordnet ist und auf welcher Videotextseite weitere Informationen über die jeweilige Sendung zu finden sind.

Bei dem vorstehend beschriebenen Ausführungsbeispiel wurden als Übereinstimmungskriterien der Sendetag sowie die Anfangs- und die Endzeit jeder Sendung verwendet,d.h. in der Übersicht sind alle Sendungen enthalten, die am vorgegebenen Sendetag ausgestrahlt werden und bei denen sowohl die Anfangs- als auch die Endzeit im vorgegebenen Zeitintervall liegt.

Es ist natürlich ebenso möglich, neben dem Sendetag ausschließlich die Anfangszeit oder ausschließlich die Endzeit als Übereinstimmungskriterium zu verwenden. Weiterhin ist es möglich, eine Übersicht über alle Sendungen des vorgegebenen Sendetages zu erhalten, deren Anfangs- oder Endzeit im vorgegebenen Zeitintervall liegt.

Da eine Überprüfung aller Sendungen aller Sender, auf die das Fernsehgerät abgestimmt ist, vergleichsweise lange dauert, werden in vorteilhafter Weiterbildung der Erfindung sämtliche Videotextseiten aller Sender, die Programmvorschauseiten enthalten, automatisch nach der Einschaltung des Fernsehempfängers in einem nicht gezeichneten Mehrseitenspeicher abgelegt und von dort aus bei Bedarf unter Steuerung durch den Mikrocomputer 6 der Überpüfungsschaltung 5 zugeführt.

Gemäß einer vorteilhaften Weiterbildung der Erfindung erfolgt in der Überprüfungsschaltung 5 weiterhin ein Vergleich der Programmartsignale derjenigen Sendungen, die das vorgegebene Zeitkriterium erfüllen, mit einem vorgegebenen Programmartkennsignal. Programmarten sind beispielsweise Sport, Spielfilme, Kultur, usw. Die Vorgabe dieses Programmartkennsignals erfolgt ebenfalls durch den Benutzer mittels der Bedieneinheit 7. Das eingegebene Programmartkennsignal wird ebenso wie die Informationen über den vorgegebenen Sendetag und das vorgegebene Zeitintervall unter Steuerung durch den Mikrocomputer 6 in der ersten Speichereinheit 8 zwischengespeichert und zum Zwecke des genannten Vergleichs über die Leitung a der Überprüfungsschaltung 5 zugeführt. Bei dieser Weiterbildung der Erfindung kann sich der Benutzer beispielsweise einen Überblick darüber verschaffen, welche Spielfilme an einem vorgegebenen Tag in einem vorgegebenen Zeitintervall beginnen.

Eine weitere Ausführungsform der Erfindung besteht darin, die im Videotextdatenstrom enthaltenen Programmartkennsignale neben dem Sendetag als einziges Auswertekriterium zu verwenden und in der Überprüfungsschaltung 5 mit einem vom Benutzer vorgegebenen Programmartkennsignal zu vergleichen. Mittels dieser Ausführungsform kann sich der Benutzer beispielsweise eine Tabelle anzeigen lassen, die eine Übersicht über alle an einem bestimmten Sendetag ausgestrahlten Spielfilme enthält. Die Eingabe des Sendetages und des gewünschten Programmartkennsignals erfolgt - wie bereits oben im Zusammenhang mit den anderen Ausführungformen beschrieben wurde - mittels der Bedieneinheit 7. Der Vergleich dieser Daten mit den im Videotextdatenstrom enthaltenen Daten erfolgt - wie ebenfalls bereits oben im Zusammenhang mit den anderen Ausführungsformen beschrieben wurde - in der Überprüfungsschaltung 5.

Vorstehend wurde die Erfindung am Beispiel eines Fernsehempfängers beschrieben. Es ist aber ebenso möglich, die in der Figur 1 gezeigten Bausteine 1, 4, 5, 6, 7, 8 und 9 in einem Videorecorder anzuordnen.

## Patentansprüche

1. Videogerät zur Verarbeitung von Zusatzsignalen, welche in den Austastlücken von Fernsehsignalen übertragen werden und welche Informationen über die Programmquellen, die Sendezeiten und die Titel einer Vielzahl von Fernsehsendungen enthalten, mit
- einer Abtrennschaltung zur Abtrennung der Zusatzsignale aus den Fernsehsignalen,
- einer Schaltung zur Erzeugung eines Anzeigesignals, welches einer Tabelle über ein Programmangebot entspricht,
**dadurch gekennzeichnet,** daß es
- eine Überprüfungsschaltung (5) aufweist, die die in den Zusatzsignalen enthaltenen Informationen über den Sendetag und die Sendezeiten der Fernsehsendungen daraufhin überprüft, ob sie in einem vorgegebenen Zeitintervall liegen, und daß
- die Tabelle eine Übersicht über alle Fernsehsendungen enthält, die in dem vorgegebenen Zeitintervall liegen.

2. Videogerät nach Anspruch 1,
**dadurch gekennzeichnet,** daß die Überprüfungschaltung (5) überprüft, ob ein in den Zusatzsignalen enthaltenes Programmartkennsignal mit einem vorgebenen Programmartkennsignal übereinstimmt, und daß die Tabelle eine Übersicht über alle Fernsehsendungen enthält, die in dem vorgegebenen Zeitintervall liegen und Fernsehsendungen der vorgegebenen Programmart sind.

3. Videogerät zur Verarbeitung von Zusatzsignalen, welche in den Austastlücken von Fernsehsignalen übertragen werden und welche Informationen über die Programmquellen, die Programmarten, die Sendezeiten und die Titel einer Vielzahl von Fernsehsendungen enthalten, mit
- einer Abtrennschaltung zur Abtrennung der Zusatzsignale aus den Fernsehsignalen,
- einer Schaltung zur Erzeugung eines Anzeigesignals, welches einer Tabelle über ein Programmangebot entspricht,
**dadurch gekennzeichnet,** daß es
- eine Überprüfungsschaltung (5) aufweist, die die in den Zusatzsignalen enthaltenen Informationen über die Programmarten der Fernsehsendungen daraufhin überprüft, ob sie mit einer vorgegebenen Programmart übereinstimmen, und daß
- die Tabelle eine Übersicht über alle Fernsehsendungen enthält, die der vorgegebenen Programmart angehören.

4. Videogerät nach einem der vorhergehenden Ansprüche, **dadurch gekennzeichnet,** daß es ein Videorecorder ist.

5. Videogerät nach einem der Ansprüche 1 - 3, **dadurch gekennzeichnet,** daß es ein Fernsehempfänger ist.

6. Videogerät nach einem der vorhergehenden Ansprüche, **dadurch gekennzeichnet,** daß es einen Mehrseitenspeicher aufweist, in welchem nach dem Einschalten des Gerätes automatisch Programmvorschauseiten aller Sender abgespeichert werden.
